Europäisches Patentamt

European Patent Office ·

Office européen des brevets

(19)

(11) Numéro de publication : **0 099 834**
**B1**

# (12) FASCICULE DE BREVET EUROPÉEN

(45) Date de publication du fascicule du brevet :
01.10.86

(21) Numéro de dépôt : 83401488.8

(22) Date de dépôt : 20.07.83

(51) Int. Cl.⁴ : **F 26 B   5/06**, F 26 B 25/00

(54) **Procédé et dispositif de chargement-déchargement d'un lyophilisateur.**

(30) Priorité : 21.07.82 FR 8212735

(43) Date de publication de la demande :
01.02.84 Bulletin 84/05

(45) Mention de la délivrance du brevet :
01.10.86 Bulletin 86/40

(84) Etats contractants désignés :
BE CH DE FR GB IT LI

(56) Documents cités :
DE-C-   503 698
FR-A- 1 415 793
FR-A- 1 546 981
FR-A- 2 297 787
GB-A- 1 007 447
US-A- 3 184 862

(73) Titulaire : SOCIETE D'UTILISATION SCIENTIFIQUE
ET INDUSTRIELLE DU FROID USIFROID (Procédés
Rieutord)
Rue Claude Bernard Boîte Postale no 123
F-78312 Maurepas Cédex (FR)

(72) Inventeur : Baron, Michel
26, rue de la Ferronnerie
F-78370 Plaisir (FR)
Inventeur : Lambert, Claude
23, rue du Lac
F-78480 Verneuil-sur-Seine (FR)

(74) Mandataire : Leclercq, Maurice et al
L'AIR LIQUIDE SOCIETE ANONYME POUR L'ETUDE
ET L'EXPLOITATION DES PROCEDES GEORGES
CLAUDE 75, Quai d'Orsay
F-75321 Paris Cedex 07 (FR)

## Description

La présente invention concerne le chargement et le déchargement d'un lyophilisateur par transfert simultané d'un groupe étagé de cadres-supports pour bacs destinés à coopérer avec des étagères à effet thermique du lyophilisateur, à l'aide d'un chariot de transfert desdits cadres-supports.

Un tel mode de chargement qui met en œuvre des cadres-supports à bacs étagés est décrit dans le brevet français FR-A-2 297 787. Il se traduit, lors du chargement et du déchargement, par un engagement et un dégagement à frottement des bacs sur les étagères de lyophilisateur, ce qui présente l'inconvénient de générer, par abrasion, des particules indésirables qui peuvent pénétrer dans les boîtes de produits à lyophiliser placés dans les bacs. Lorsqu'il s'agit de produits pharmaceutiques, ces particules sont tout à fait proscrites. Dans le brevet français FR-A-1 546 981, les récipients contenant des produits congelés à dessécher sont introduits dans une enceinte sur des plaques chauffantes sur lesquelles ils se déplacent par glissement, ce qui présente le même inconvénient rappelé ci-dessus. Dans l'US-A-3 184 862, on évite de tels phénomènes d'abrasion mais cela au prix d'inconvénients importants, puisque les bacs sont maintenus en position écartée des plaques chauffantes, alors qu'il convient que le transfert thermique s'effectue essentiellement par contact direct entre une plaque et un fond de récipient.

La présente invention évite tous ces inconvénients ; elle se caractérise en ce que le chargement s'effectue en présentant le chariot de transfert devant une entrée du lyophilisateur avec alignement de rails de guidage pour les cadres-supports dans le chariot de transfert et de moyens de roulement pour ces mêmes cadres dans le lyophilisateur et en déplaçant simultanément les cadres-supports exclusivement par roulement sur lesdits rails de guidage et moyens de roulement de lyophilisateur sensiblement jusqu'à une position de butée où des galets de roulement des cadres-supports sont soumis à une action d'affaissement amenant en contact, face contre face, lesdits bacs avec lesdites étagères et on procède, lorsque l'opération de lyophilisation est terminée, à un mode opératoire inverse.

De la sorte, on conçoit très bien que le phénomène de roulement de galets, qui s'effectue sans frottement, n'est pas générateur de particules indésirables, alors que la mise en contact des bacs et des étagères à effet thermique s'effectue par un déplacement pratiquement perpendiculaire à leurs faces, donc également sans frottement appréciable.

L'invention concerne également un ensemble lyophilisateur et chariot de transfert destiné à mettre en œuvre le procédé.

Les caractéristiques et avantages de l'invention ressortiront d'ailleurs de la description qui suit, à titre d'exemple en référence aux dessins annexés dans lesquels :

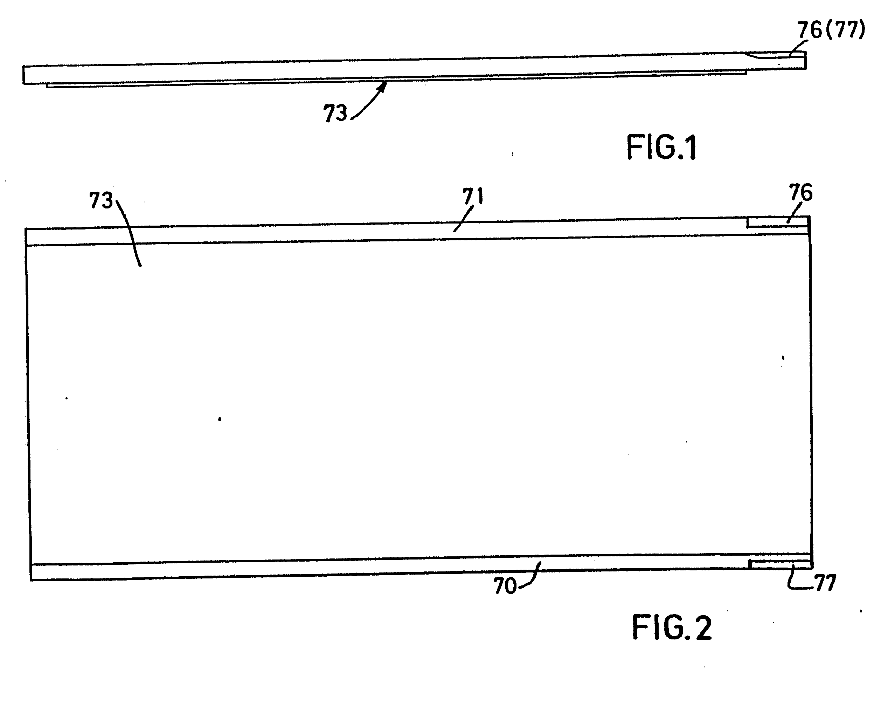

la figure 1 est une vue de côté d'une étagère de lyophilisateur ;

la figure 2 est une vue de dessus de cette même étagère ;

la figure 3 est une vue de côté d'un cadre-support de chariot ;

la figure 4 est une vue de dessus de ce même cadre-support ;

les figures 5 et 6 sont des vues analogues aux figures 3 et 4, les cadres-supports étant chargés de bacs ;

les figures 7, 8 et 9 sont des vues de côté de trois positions d'engagement d'un cadre-support dans un lyophilisateur ;

la figure 10 est une vue en perspective partielle avec arrachement partiel d'un chariot de transfert ;

la figure 11 est une vue partielle analogue de la figure 10 montrant l'engagement d'un cadre-support avec ses bacs ;

la figure 12 est une vue en perspective cavalière du chariot de transfert en position de chargement.

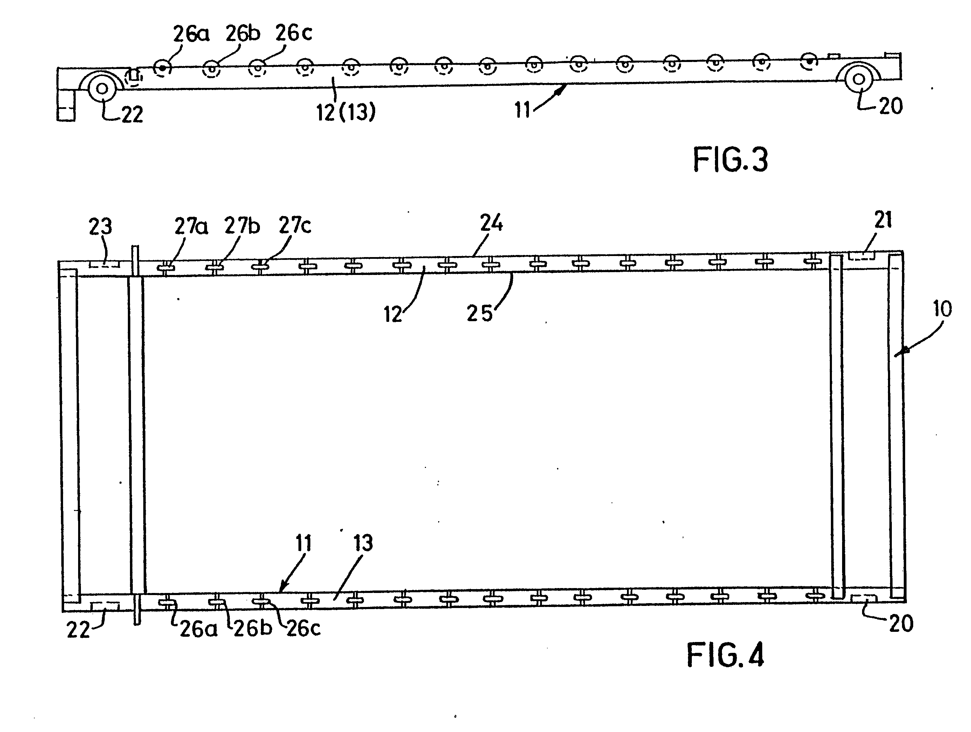

En se référant aux dessins, on voit qu'un chariot de transfert 1 est constitué d'un châssis 2 mobile au sol, de forme allongée avec une pluralité de rails de guidage 3, 4, 5 d'un côté, 3', 4', 5' d'un autre côté destinés à recevoir des cadres-supports 10 représentés aux figures 3 à 6. Ces cadres-supports 10 comportent essentiellement un cadre proprement dit 11 formé de deux longerons 12 et 13 solidarisés par des barres transversales 14, 15 et 16, la barre 15 étant destinée à former butée pour les bacs. Ces cadres-supports 10 présentent quatre galets de roulement (20, 22) (21, 23) qui sont adaptés à s'engager dans les rails (3) ou (3') respectivement ou (4) (4') ou (5) (5'). Ces cadres-supports 10 présentent des longerons 12, 13 chacun à double paroi 24, 25 avec une pluralité de perforations étagées longitudinalement destinées à recevoir deux séries de petits galets 26a, 26b, 26c..., 27a, 27b, 27c. Ces galets sont adaptés à supporter une pluralité de bacs 30, 31, 32 engagés par des ailes latérales 33, 34 sur lesdits galets.

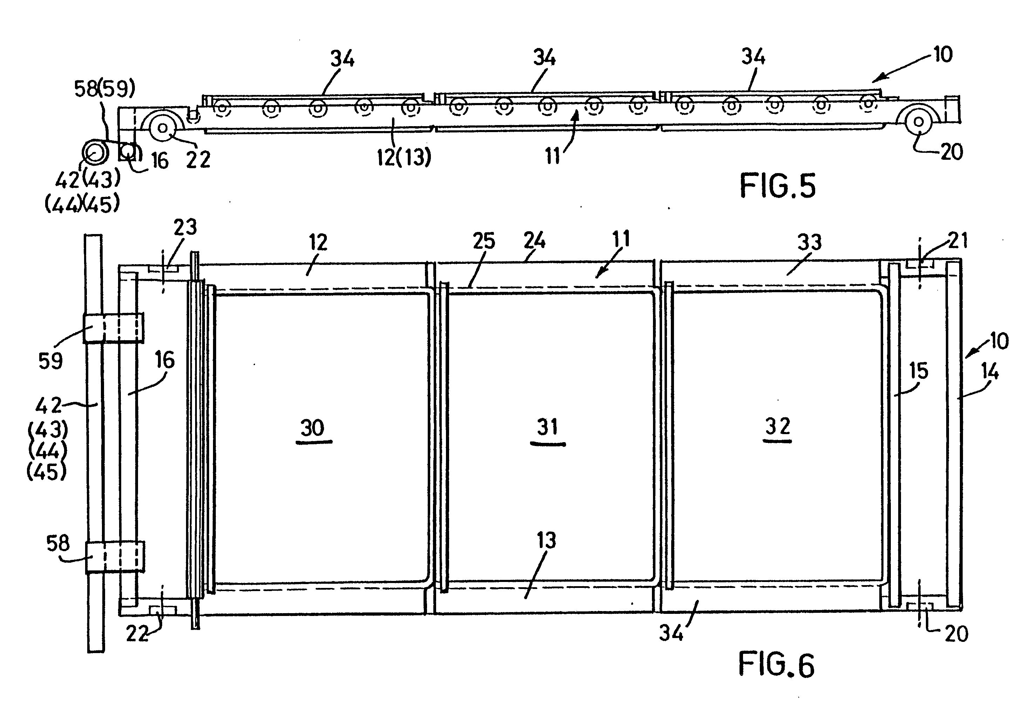

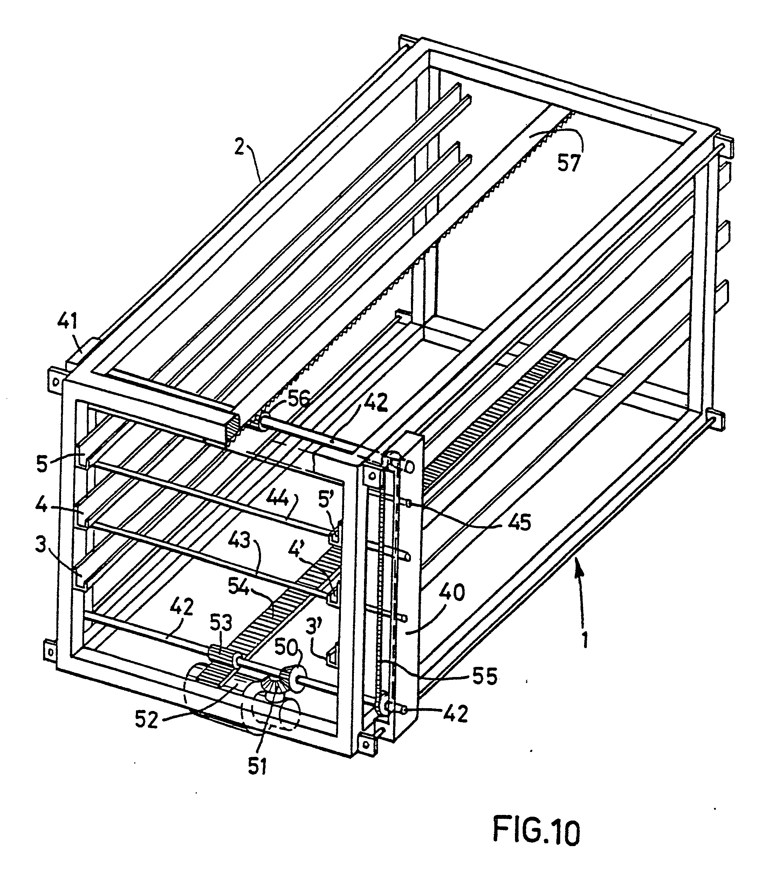

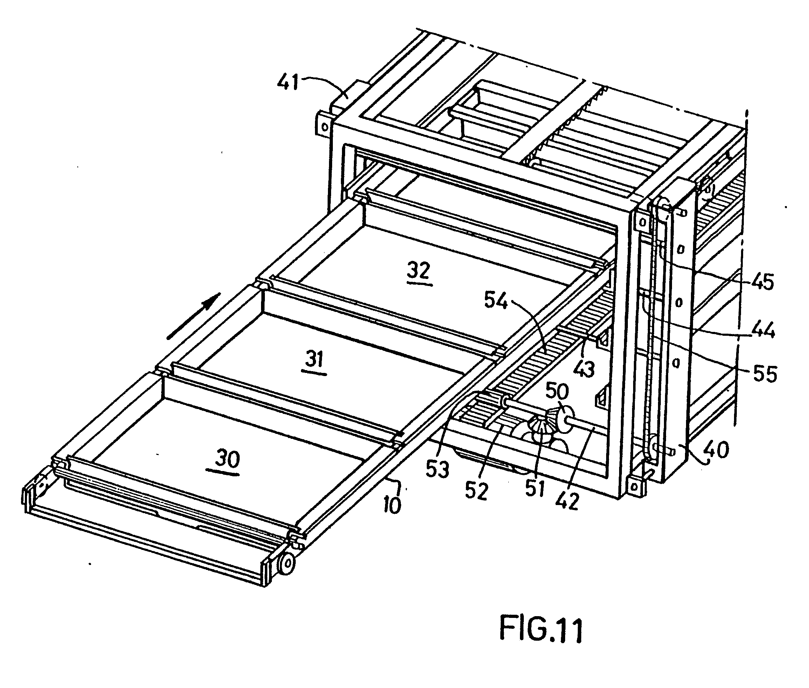

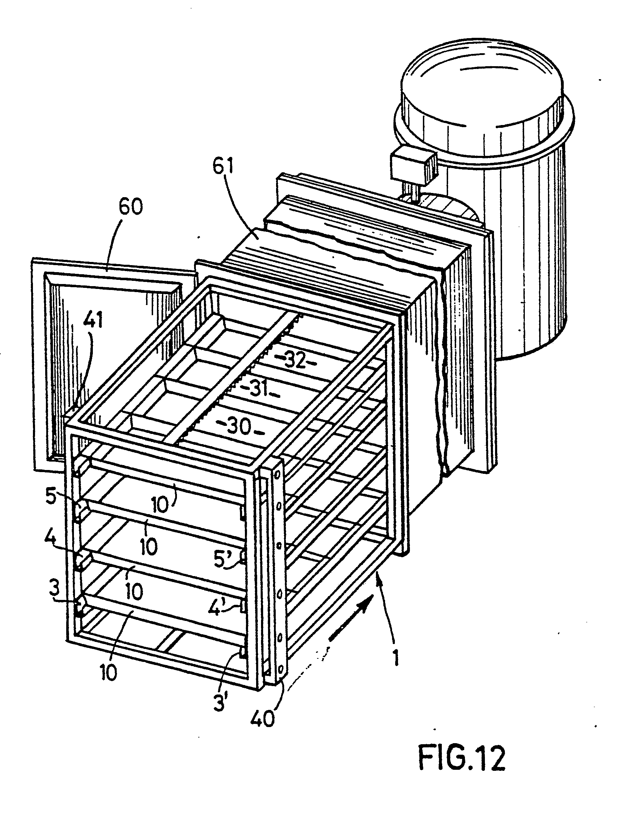

En se référant tout particulièrement aux figures 10, 11, 12, on voit que le chariot 1 présente de part et d'autre de ses faces latérales des barres de poussée 40, 41 qui sont solidarisées entre elles par des tiges de poussée transversales 42, 43, 44, 45 et qui sont équipées chacune de deux crochets 58 et 59 (voir figure 5) qui, par rotation de chaque barre, viennent en prise avec une barre 16 d'un cadre-support 10 pour assurer l'extraction du lyophilisateur des cadres-supports 10 et qui présentent des prolongements latéraux de part et d'autre destinés à coopérer avec les barres de poussée 40. La barre inférieure 42 est une barre motrice qui est adaptée à être déplacée parallèlement à elle-même le long du chariot de chargement et, à cet effet, elle est solidaire de deux pignons de renvoi 50, 51 et d'un moteur 52, la barre 42 coopérant par un pignon 53 avec une crémaillère horizontale 54 fixée à demeure sur le chariot 1. La barre 42 entraîne par deux courrois 55 la barre supérieure 45 qui coopère également par un pignon 56 avec une crémaillère supérieure 57. De la sorte, en actionnant le moteur et grâce aux barres de poussée 40 et 41, on déplace l'ensemble des barres 42, 43, 44, 45 le long du chariot, ce qui fait déplacer par roulement les cadres-supports le long des rails de guidage 3-3', 4-4', 5-5', etc., grâce aux galets 20, 21, 22, 23.

Pour assurer le chargement, on procède de la façon suivante : on engage d'abord tous les cadres-supports (quatre dans l'exemple représenté) sur leurs rails de roulement (3, 3') (4, 4') (5, 5') en les ayant équipés préalablement des bacs chargés de produits (30, 31, 32, ...) mais cet équipement peut être aussi effectué lorsque tous les cadres-supports 10 sont mis en position d'engagement complet dans le chariot de transfert 1.

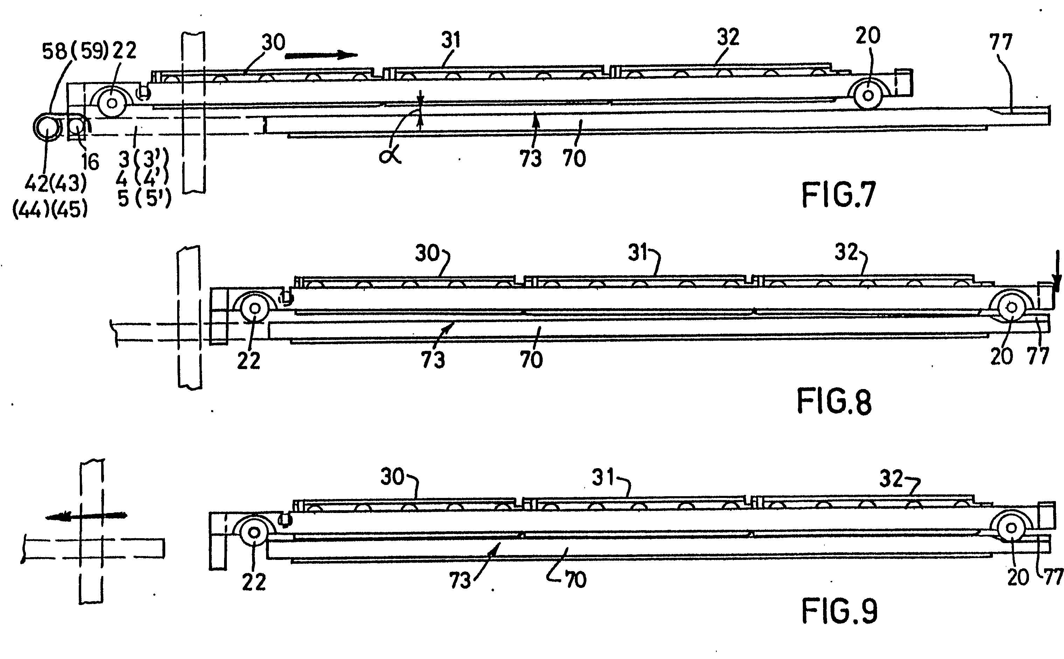

Une fois cette opération terminée, on procède de la façon suivante, en se référant tout particulièrement aux figures 7, 8, 9, 12 et 13 : on déplace au sol le chariot 1 pour l'amener en face de l'entrée d'une porte ouverte 60 du lyophilisateur 61 de façon à ce que les rails de roulement (3, 3') (4, 4') (5, 5') du chariot 1 se présentent en alignement complet exact avec des moyens de roulement 70, 71, formées par les bords latéraux d'étagères à effet thermique 73, placés dans le lyophilisateur et l'on note qu'à l'extrémité opposée de l'entrée, ces étagères 73 présentent deux dépressions 76, 77 en alignement avec les zones de guidage 70, 71. Ainsi, en se référant également aux figures 7, 8 et 9, on voit que l'engagement simultané de tous les cadres-supports 10 qui s'effectue par mise en route du moteur 52 et déplacement des barres de poussée 40 et 41, provoque l'entrée des cadres-supports 10 par roulement sur les étagères en maintenant un espace interstitiel α entre lesdites étagères 73, et le fond des bacs 30, 31, 32 supportés par les cadres 10. Juste avant que l'engagement des cadres-supports 10 soit terminé, les galets de roulement antérieurs 20 et 21 viennent s'engager dans les dépressions 76 et 77, ce qui provoque l'affaissement du cadre-support 10 et la venue en contact, face contre face, des bacs 30, 31, 32 avec les étagères avec lesquelles ils peuvent maintenant coopérer thermiquement. Une fois cette opération terminée, le chariot 1 peut être extrait et la porte 60 du lyophilisateur refermée. (cf. figure 13). A la fin de l'opération du lyophilisation, l'extraction des cadres-supports 10 pour bacs 30, 31, 32... est effectuée par une opération inverse, avec cependant agrippement de chacune des tiges 42, 43, 44, 45 avec les traverses homologues 16 d'un cadre-support 10 par rotation desdites barres 42, 43, 44, 45 et enclenchement des crochets (58-59).

L'invention s'applique à la lyophilisation de tout produit, notamment de produits pharmaceutiques par l'intermédiaire de bacs en relation thermique avec des étagères.

## Revendications

1. Procédé de chargement et déchargement d'un lyophilisateur (61) par transfert simultané d'un groupe étagé de cadres-supports (10) pour bacs (30-31-32) destinés à coopérer avec des étagères à effet thermique (73) du lyophilisateur (61), à l'aide d'un chariot de transfert (1) desdits cadres-supports (10), caractérisé en ce que le chargement s'effectue en présentant le chariot de transfert (1) devant une entrée du lyophilisateur (61) avec alignement de rails de guidage (3-3' ; 4-4' ; 5-5') pour les cadres-supports (10) dans le chariot de transfert (1) et de moyens de roulement (70-71) pour ces mêmes cadres (10) dans le lyophilisateur (61), et en déplaçant simultanément les cadres-supports (10) exclusivement par roulement sur lesdits rails de guidage (3-3' ; 4-4' ; 5-5') et moyens de roulement (70-71) de lyophilisateur (61) sensiblement jusqu'à une position de butée où des galets de roulement (20-21) des cadres-supports (10) sont soumis à une action d'affaissement amenant en contact, face contre face, lesdits bacs (30-31-32) avec lesdites étagères (73) et on procède, lorsque l'opération de lyophilisation est terminée, à un mode opératoire inverse.

2. Ensemble lyophilisateur et chariot de transfert, pour la mise en œuvre du procédé selon la revendication 1, du genre où le chariot de transfert (1) comporte des moyens de réception de cadres-supports (10) de bacs (30-31-32) verticalement espacés, du même espace que celui entre deux étagères (73) d'un lyophilisateur associé (61), caractérisé en ce que les moyens de réception de cadres-supports (10) sont des rails de guidage (3-3' ; 4-4' ; 5-5'), en ce que l'on prévoit des moyens (42-43-44-45) pour déplacer simultanément lesdits cadres-supports (10) le long desdits rails (3-3' ; 4-4' ; 5-5'), et en ce que des moyens de roulement (70-71) et d'affaissement, dans le lyophilisateur (61), et les cadres-supports (10) de bacs (30-31-32) sont agencés pour assurer un écartement (α) entre le fond des bacs (30-31-32) et les étagères (73), sauf pour une partie finale (76-77) d'introduction desdits cadres-supports (10) pour laquelle ledit écartement (α) est réduit à néant.

3. Ensemble lyophilisateur et chariot de transfert, selon la revendication 2, caractérisé en ce que les moyens de roulement (70-71) et d'affaissement consistent en une voie de roulement pour les cadres-supports (10) qui présente une déclivité (76-77) en sa partie finale.

4. Ensemble lyophilisateur et chariot de transfert, selon la revendication 3, caractérisé en ce que les déclivités (76-77) sont ménagées dans les étagères (73) elles-mêmes.

5. Ensemble lyophilisateur et chariot de transfert selon la revendication 2, caractérisé en ce que, dans le chariot de transfert (1), les moyens pour déplacer lesdits cadres-supports (10) comprennent des crémaillères (54-57) solidaires du châssis (2), associées à un arbre moteur (42) en butée contre des barres d'entraînement (40, 41) coopérant avec des tiges de poussée (43, 44, 45).

6. Ensemble lyophilisateur et chariot de transfert, selon la revendication 5, caractérisé en ce que les tiges de poussée (42-43-44-45) sont équipées de crochets (58-59) adaptés à venir en prise avec un cadre-support (10).

## Claims

1. Process for loading and unloading a lyophilizer (61) by simultaneous transfer of a group of supporting frames (10) one located above the other, for cases (30-31-32) defined to cooperate with the shelves (73) with thermal effect of the lyophilizer (61), by means of a transfer carriage (1) for the said supporting shelves (10), characterized in that the loading is effected by presenting the transfer carriage (1) in front of an entrance of the lyophilizer (61) in alignment with guiding rails (3-3' ; 4-4' ; 5-5') for the supporting frames (10) in the transfer carriage (1) and rolling means (70-71) for these same frames (10) in the lyophilizer (61), and by simultaneous displacing of the supporting frames (10) exclusively by rolling of the said guiding rails (3-3' ; 4-4' ; 5-5') and means for rolling (70-71) of the lyophilizer (61) essentially until an abutment position, where transporting rollers (20-21) of the supporting frames (10) are submitted to a lowering action, bringing in contact the said cases (30-31-32), face to face, with the said shelves (73), and by proceeding in an inverse operational mode, when the operation of the lyophilizer is terminated.

2. Set with lyophilizer and transfer carriage for the performance of the process according to claim 1, whereby the transfer carriage (1) comprises receiving means for the supporting (10) of the cases (30-31-32) spaced apart vertically with the same space as that between two shelves (73) of an associated lyophilizer (61), characterized in that the receiving means for the supporting frames (10) are guiding rails (3-3' ; 4-4' ; 5-5'), that means (42-43-44-45) are provided for simultaneously displacing the said supporting frames (10) along the length of the said rails (3-3' ; 4-4' ; 5-5'), and that the means for rolling (70-71) and for lowering in the lyophilizer (61) and the supporting frames (10) of the cases (30-31-32) are arranged to ensure a distance (α) between the bottom of the cases (30-31-32) and the shelves (73), except one final portion (76-77) of introduction of the said supporting frames (10) for which the said distance (α) is reduced to 0.

3. Set with lyophilizer and transfer carriage according to claim 2, characterized in that the means for rolling (70-71) and lowering consist of a rolling duct for the supporting frames (10) presenting a declivity (76-77) at the final part thereof.

4. Set with lyophilizer and transfer carriage according to claim 3, characterized in that the declivities (76-77) are arranged in the shelves (73) themselves.

5. Set with lyophilizer and transfer carriage according to claim 2, characterized in that within the transfer carriage (1) the means for displacing the said supporting frames (10) comprise gear racks (54-57) connected to the chassis (2) and associated to a motor shaft (42) in abutment against driving bars (40, 41) cooperating with pusher rods (43, 44, 45).

6. Set with lyophilizer and transfer carriage according to claim 5, characterized in that the pushing rods (42-43-44-45) are equipped with hooks (58-59) adapted for engagement with a supporting frame (10).

## Patentansprüche

1. Verfahren zum Beladen und Entladen eines Gefriertrockners (61) durch gleichzeitigen Transfer einer Gruppe von übereinander angeordneten Stützgestellen (10) für Behälter (30-31-32), die dazu bestimmt sind, mit Regalen (73) zur Wärmewirkung des Gefriertrockners (61) zusammenzuwirken, mit Hilfe eines Transferschlittens (1) für die Stützgestelle (10), dadurch gekennzeichnet, daß das Beladen dadurch erfolgt, daß man den Transferschlitten (1) vor einen Eingang des Gefriertrockners (61) in Ausrichtung bringt mit Führungsschienen (3-3' ; 4-4' ; 5-5') für die Stützgestelle (10) in dem Transferschlitten (1) und mit Rollmitteln (70-71) für eben diese Gestelle (10) im Gefriertrockner (61), und daß man gleichzeitig die Stützgestelle (10) ausschließlich durch Rollen auf diesen Führungsschienen (3-3' ; 4-4' ; 5-5') und durch Rollmittel (70-71) des Gefriertrockners im wesentlichen bis zu einer Anschlagposition verlagert, wo die Transportrollen (20-21) der Stützgestelle (10) abgesenkt werden, wobei die genannten Behälter (30-31-32) mit den Regalen (73) Fläche gegen Fläche in Berührung gebracht werden, und daß man, wenn der Betrieb des Gefriertrockners abgeschlossen ist, gemäß einer umgekehrten Betriebsart verfährt.

2. Aufbau mit Gefriertrockner und Transferschlitten für die Durchführung des Verfahrens nach Anspruch 1, bei welchem der Transferschlitten (1) Aufnahmemittel für die Stützgestelle (10) der Behälter (30-31-32) aufweist, mit vertikalem Abstand, der gleich ist dem zwischen zwei Regalen (73) eines zugeordneten Gefriertrockners (61), dadurch gekennzeichnet, daß die Aufnahmemittel für die Stützgestelle (10) Führungsschienen (3-3' ; 4-4' ; 5-5') sind, daß man Mittel (42-43-44-45) vorsieht zum gleichzeitigen Verlagern dieser Stützgestelle (10) längs dieser Schienen (3-3' ; 4-4' ; 5-5') und daß die Mittel zum Rollen (70-71) und zum Absenken in dem Gefriertrockner (61) und die Stützgestelle (10) der Behälter (30-31-32) angeordnet sind, um einen Abstand (α) sicherzustellen zwischen dem Boden der Behälter (30-31-32) und den Regalen (73), außer für ein Endteil (76-77) für das Einführen dieser Stützgestelle (10), für welchen dieser Abstand (α) zu 0 reduziert ist.

3. Aufbau mit Gefriertrockner und Transferschlitten nach Anspruch 2, dadurch gekennzeichnet, daß die Mittel zum Rollen (70-71) und zum Absenken aus einer Rollstrecke bestehen für die Stützgestelle (10), die an ihrem Endteil ein Gefälle aufweist.

4. Aufbau mit Gefriertrockner und Transferschlitten nach Anspruch 3, dadurch gekennzeichnet, daß die Gefälle (76-77) in den Regalen (73) selbst angebracht sind.

5. Aufbau mit Gefriertrockner und Transferschlitten nach Anspruch 2, dadurch gekennzeichnet, daß in dem Transferschlitten (1) die Mittel zum Verlagern der Stützgestelle (10) Zahnstangen (54-57) aufweisen, die mit dem Rahmen (2) verbunden sind und einer Antriebswelle (42) auf Anschlag gegen Mitnahmestäbe (40, 41) zugeordnet sind, die mit Schubstangen (43, 44, 45) zusammenwirken.

6. Aufbau mit Gefriertrockner und Transferschlitten nach Anspruch 5, dadurch gekennzeichnet, daß die Schubstangen (42-43-44-45) mit Haken (58-59) ausgestattet sind, die mit einem Stützgestell (10) in Eingriff bringbar sind.

FIG.1

76(77)

73

FIG.2

76

71

73

77

70

FIG.3

FIG.4

FIG.5

FIG.6

0 099 834

FIG.7

FIG.8

FIG.9

FIG.10

FIG.11

**FIG.12**